(19) Europäisches Patentamt
European Patent Office
Office européen des brevets

(11) **EP 0 911 428 B1**

(12) **EUROPÄISCHE PATENTSCHRIFT**

(45) Veröffentlichungstag und Bekanntmachung des Hinweises auf die Patenterteilung:
**08.01.2003 Patentblatt 2003/02**

(51) Int Cl.[7]: **C25B 1/00**, C01G 29/00

(21) Anmeldenummer: **98119104.2**

(22) Anmeldetag: **09.10.1998**

(54) **Verfahren zur Herstellung von Wismutverbindungen**

Process for producing bismuth compounds

Procédé pour la fabrication de composés de bismuth

(84) Benannte Vertragsstaaten:
**DE ES FR GB IT**

(30) Priorität: **22.10.1997 DE 19746471**

(43) Veröffentlichungstag der Anmeldung:
**28.04.1999 Patentblatt 1999/17**

(73) Patentinhaber: **Goldschmidt AG**
**45127 Essen (DE)**

(72) Erfinder:
• **Guhl, Dieter, Dr.**
**67346 Speyer (DE)**
• **Honselmann, Frank**
**67366 Weingarten (DE)**

(56) Entgegenhaltungen:
**WO-A-90/04048**

• **CHEMICAL ABSTRACTS, vol. 75, no. 24, 13. Dezember 1971 Columbus, Ohio, US; abstract no. 147194, SHIMATANI, YOSHIO ET AL: "Dissolution of bismuth" XP002088783 & JP 46 004815 A (SUMITOMO METAL MINING CO., LTD.)**
• **DATABASE WPI Section Ch, Week 9648 Derwent Publications Ltd., London, GB; Class E32, AN 96-482644 XP002088784 & JP 08 246200 A (DAIWA KASEI KENKYUSHO KK), 24. September 1996**

**Beschreibung**

Gegenstand der Erfindung ist ein Verfahren zur Herstellung von hochkonzentrierten, hydrolysestabilen Wismutmethansulfonatlösungen.

Die Beschichtung metallischer Werkstoffe, wie Kupfer, Stahl oder Aluminium mit metallischem Zinn oder Zinnlegierungen, insbesondere mit Zinn/Blei-Legierungen ist in vielen Anwendungen der Galvanotechnik weit verbreitet. Aufgabe der Beschichtung kann beispielsweise sein, einen Korrosions- und Anlaufschutz des Substrates zu gewährleisten, die Lötbarkeit oder die Gleiteigenschaften der Metalloberfläche zu verbessern. Um eine solche Legierungsbeschichtung entweder stromlos oder galvanisch aufbringen zu können, ist es notwendig, stabile Lösungen der benötigten Metallsalze in weiterer Konzentrationsbereich für die Formulierung des Beschichtungsbades zur Verfügung zu haben. Für Zinn und Blei sowie andere gängige Legierungspartner ist dies gegeben.

Vor dem Hintergrund einer zunehmenden Rückgewinnung der metallischen Inhaltsstoffe aus elektrotechnischen oder elektronischen Bauteilen gewinnen zunehmend solche galvanotechnische Verfahren an Bedeutung, mit denen toxikologisch unbedenkliche. Legierungen. erzeugt werden. können. Der Ersatz von Blei gegen ein anderes Metall in Zinnlegierungen ist Gegenstand vielfältiger Anstrengungen. Besonderes Interesse gewinnt vor diesem Hintergrund das Metall Wismut als Legierungspartner des Zinns. So werden heute bereits zunehmend metallurgisch hergestellte Zinn-Wismut-Legierungen als Ersatz für toxikologisch bedenkliche Zinn-Blei-Legierungen verwendet.

Für den Einsatz als galvanotechnischer Rohstoff kommen vor allem solche Metallsalze in Frage, die sich leicht und in fast beliebig einstellbaren Konzentrationen in Wasser lösen lassen. Bevorzugt sind insbesondere wässrige Lösungen, da immer mehr galvanische Bäder mittels automatischer Dosierpumpen reguliert werden.

Diese Eigenschaften führen beim praktischen Einsatz von Wismutsalzen als Bestandteil von Legierungsbädern zu erheblichen Problemen, weil die Anwendungskonzentrationen und die Formulierungsfreiheit erheblich eingeschränkt sind. In galvanischen Bädern liegen die Bi-Gehalte deutlich unter 100 g/l bei gleichzeitig deutlich hohen Säuregehalten. In einem galvanischen Bad, das zur Erzeugung einer Legierungsschicht dient, ist eine hohe Metallkonzentration nicht notwendig. Für Produkte, die als Rohstoff für galvanische Bäder gedacht sind, ist aber eben dies ein wichtiges Charakteristikum. Hohe Metallsalzkonzentrationen sind wichtig, um nicht zuviel Wasser in das galvanische Bad einzuführen, wenn der Metallgehalt aufgefrischt wird'.

Gleichwohl sind einige Badformulierungen bekannt. Zur galvanischen Abscheidung von Wismut auf Aluminium und Stahl wird ein Bad auf Basis Wismutperchlorat oder Wismutchlorid mit dem Natriumsalz der Ethylendiamintetraessigsäure ($Na_2$EDTA) beschrieben (Eidenschink, Dommain, Metalloberfläche, Band 20, 1966, S.173/174). Das Wismutperchlorat wird durch Auflösung von basischem Wismutcarbonat in überschüssiger Perchlorsäure oder durch anodische Auflösung von Wismutmetall gewonnen.

Die galvanische Abscheidung von Zinn-Wismut-Legierungen auf Basis von tetrafluorborsauren Elektrolyten beschreiben Drescher et al. (Galvanotechnik, 85, 1994, 4187 - 4191). Der Legierungselektrolyt wird durch Auflösung von Wismutoxid oder -carbonat gewonnen. Möglich ist auch eine Anreicherung durch anodische Wismutauflösung bei hohen Stromdichten.

Die JP 08246200 A lehrt die Herstellung von Zinn(II)sulfat und Wismutsulfat durch die Elektrolyse schwefelsaurer Lösungen mit Zinn- oder Wismutanoden unter Verwendung einer Anionenaustauschermembran.

Patent Abstracts of Japan, C-730, 1990, Vol. 14, No. 282, JP-2-88790A beschreibt die Herstellung von wäßrigen Galvanisierlösungen auf der Basis von Wismut-/Zinnverbindungen. Dazu werden Säuren wie Schwefelsäure oder organische Sulfonsäuren, z. B. eine Alkansulfonsäure mit metallischem Wismut als Anode einer elektrolytischen Auflösung der Anode unterworfen. Hierbei werden die durch das Galvanisieren der Lösung entzogenen Wismutionen laufend durch die an der Anode entstehenden Wismutionen ersetzt, so daß sich eine praktisch konstante Wismutionenkonzentration einstellt, die ein stabiles Galvanisieren ermöglicht.

Die EP 0 715 003 A lehrt, daß stabile Bäder zur Abscheidung einer Zinn/Wismut-Legierung auf Basis methansulfonsaurer Lösungen . durch Zusatz verschiedener Komplexbildner, wie beispielsweise Gluconsäure, Citronensäure und anderer, hergestellt werden können, wobei die Herkunft des Bi-Gehaltes ungenannt bleibt.

Die. WO95/25008 beschreibt die Verwendung Wismutchloridhaltiger Elektrolyte zur Beschichtung von Kupfer, wobei das Wismut in Form des Oxides eingeführt wird und ein großer Überschuß an Säure gewährleistet sein muß.

Die Herstellung der Salze geschieht nach dem Stand der Technik dergestalt, daß Wismutoxid oder basisches Wismutcarbonat in der konzentrierten Säure aufgelöst wird. Bei der Durchführung dieses Verfahrens muß darauf geachtet werden, daß stets ein genügend großer Überschuß an Säure vorhanden ist, da Wismutsalze starker anorganischer Säuren beim Auflösen in Wasser gemäß folgender Gleichung sofort hydrolysieren:

$$BiCl_3 + H_2O \longrightarrow BiOCl + 2\ HCl$$

Eine ähnliche Reaktivität ist auch für die Sulfate und Nitrate des Wismuts beschrieben (siehe z.B. F.

A. Cotton, G. Wilkinson, Anorganische Chemie, 4. Auflage, Verlag Chemie, Seiten 449 -494). Wird eine in konzentrierter Säure angesetzte Wismutsalzlösung mit Wasser oder einem anderen Elektrolyten verdünnt, tritt ebenfalls eine Hydrolyse ein.

So läßt sich beispielsweise eine stabile Wismutsulfat-Lösung nur durch Auflösen von $Bi_2O_3$ in 50 %iger Schwefelsäure herstellen. Ein Auflöseversuch in verdünnter Schwefelsäure, z.B. 10%ig, führt direkt zum Wismutylsulfat, welches als unlöslicher Niederschlag ausfällt.

Galvanotechnische Verfahren basierend auf dem Einsatz von hochkonzentrierten Wismutsalzlösungen sind nicht bekannt. Wie die Beispiele belegen, geht man entweder von festen Oxiden oder Carbonaten aus, was zu einem erhöhten manuellen Aufwand führt oder man erzeugt die gewünschte Wismutkonzentration in situ. Auch die in-situ-Erzeugung des Wismutgehaltes ist. mit Nachteilen verbunden. Zum einen sind lösliche Anoden als Bi-Quelle zwingend erforderlich, was zum einen deren Herstellung und Recycling notwendig macht und zum anderen zur" Bildung nichtlöslicher Anteile im galvanischen Bad führt, was für die Beschichtungsqualität sehr nachteilig sein kann. Ferner können die löslichen Anoden nicht dimensionsstabil sein, was zu einer Veränderung der Stromdichteverteilung im galvanischen Bad führt und damit ebenfalls zu unerwünschten Einflüssen auf die Schichtdickenverteilung der galvanischen Abscheidung.

Auf der anderen Seite sind Verfahren zur Herstellung hochkonzentrierter Wismutsalzlösungen insbesondere auf Basis von Methansulfonsäure, die dann in der Anwendung auf die gewünschte Konzentrationen verdünnt werden können, nicht bekannt.

Die WO 93/07309 lehrt, daß durch Verwendung von Wismutanoden zinnhaltige Elektrolyte auf Methansulfonsäure-Basis durch anodische Oxidation Wismutionen in den Elektrolyten eingeführt werden können, wobei der Bi-Gehalt im Bereich von 10 g/l bleibt.

Auch die WO-A-9 004 048 lehrt die Herstellung von Wismutmethansulfonatlösungen durch anodische Auflösung von Wismut, wobei die Lösungen aber geringer konzentriert sind.

Das Problem der vorliegenden Erfindung besteht demgegenüber darin, ein Verfahren zur Verfügung zu stellen, welches insbesondere die Bereitstellung von stabilen, hochkonzentrierten, beliebig verdünnbaren Wismutmethansulfonatlösungen in einfacher und wirtschaftlicher Form ermöglicht.

Das vorgenannte Problem wird gelöst durch ein Verfahren gemäß den Merkmalen des Anspruchs 1.

Vorzugsweise wird erfindungsgemäß Methansulfonsäure in einer Konzentration von 20 bis 70 Gew.-% eingesetzt.

Der Stand der Technik wird insoweit - wie bereits beschrieben - durch die chemische Auflösung eines Wismutoxides oder -carbonates in Methansulfonsäure repräsentiert. Mit diesem Verfahren sind Lösungen darstellbar, die maximal 380 g Wismutmethansulfonat pro 1 l Lösung enthalten können. Gleichzeitig sind noch ca. 160 g freie Methansulfonsäure gegenwärtig. Die Herstellung einer Lösung mit dieser Konzentration ist aufwendig, da die Wismutrohstoffzugabe sehr sorgfältig dosiert werden muß. Wird zuviel Bi-Rohstoff zugegeben, kommt es. leicht zu Ausfällungen, die nicht mehr rückgängig gemacht werden können. Die Dosierrate darf ca. 1 g/min. bei einem Volumen von 100 ml nicht überschreiten, was für eine technische Realisierung nachteilig ist.

Es ist nicht möglich den Wismutmethansulfonat-Gehalt durch weitere Zugabe von Wismutoxid oder -carbonat oder -hydroxid über die Konzentration von 380 g/l zu erhöhen. Man erhält keine klaren Lösungen mehr. Es bildet sich ein Bodensatz von weißem Wismutylmethansulfonat. Auch eine Temperaturerhöhung führt zu keiner verbesserten Löslichkeit. Nach üblichem Verständnis sollte dieser Gehalt das Maximum der Löslichkeit sein. Die überraschende Erkenntnis der vorliegenden Erfindung besteht jedoch darin, daß mit Hilfe der elektrochemischen Verfahren deutlich höhere Bi-Salzgehalte zugänglich sind. So können die Gehalte an Wismutmethansulfonat beispielsweise deutlich mehr als 600g/l betragen.

Es war nicht zu erwarten, daß die elektrochemisch hergestellten Lösungen sich in ihren Gehalten von denen der chemisch hergestellten Lösungen unterscheiden könnten, da üblicherweise die chemische Löslichkeit identisch mit der elektrochemischen Löslichkeit ist. Mit Hilfe der vorliegenden Erfindung wurde wenigstens für die beanspruchten Wismutsalze belegt, daß dies nicht der Fall ist.. Der: Kern der vorliegenden Erfindung besteht somit darin, daß gegenüber dem Stand der Technik Bi-Salzlösungen zugänglich sind, die erheblich mehr Wismut enthalten, als dies nach dem Stand der Technik möglich'sein sollte.

Erfindungsgemäß wird die elektrochemische Herstellung direkt aus dem Wismut-Metall vorgeschlagen. Das Metall wird als Elektrodenmaterial in Elektrolysezellen eingebaut, wobei das Anodenmaterial zwingend aus Wismut bestehen muß. Das Kathodenmaterial besteht vorzugsweise aus Wismut, kann aber auch aus Edelstahl oder Graphit oder einem anderen leitfähigem gegenüber dem Elektrolyten resistenten Material bestehen. Als Elektrolyt dient vorzugsweise diejenige Säure als deren Metallsalz gewonnen werden soll. Der Aufbau einer Elektrolysezelle ist dem Fachmann geläufig. Einige gängige-Typen von Elektrolysezellen, die für den vorliegenden Einsatzzweck geeignet sind, sind von Scott, Electrochemical processes for clean technology, The Royal Society of Chemistry, Cambridge, 1995, beschrieben worden. Es können sowohl membranhaltige als auch membranfreie Elektrolysezellen geeigneter Bauart eingesetzt werden. Die Auflösung des Metalls erfolgt an der Anode gemäß folgender Reaktion:

$$Bi \rightarrow Bi^{3+} + 3\ e^-$$

Die Kathodenreaktion läßt sich wie folgt formulieren:

$$3\ H_2O + 3\ e^- \rightarrow 1,5\ H_2 + 3\ OH^-$$

Überraschenderweise konnte bei der elektrochemischen Auflösung von Wismut in Methansulfonsäure festgestellt werden, daß es möglich ist, Wismutmethansulfonatlösungen zu erhalten, deren Gehalte deutlich höher sind, als nach dem chemischen Auflöseverfahren zugänglich sind. Mit Hilfe der vorliegenden Erfindung sind Wismut-Salzlösungen herstellbar, deren Gehalte 100 g/l oder mehr betragen. Lösungen dieser Konzentration können kaum als galvanische Bäder eingesetzt werden. Die erhaltenen Lösungen sind lagerstabil und mit vollentsalztem Wasser beliebig verdünnbar. Eine nach dem erfindungsgemäßen Verfahren hergestellte Wismutmethansulfonat-Lösung hatte einen Gehalt von ca. 630 g/l Wismutmethansulfonat und ca. 200 g/l freie Methansulfonsäure. Der Gehalt lag damit fast doppelt so hoch wie bei einer Lösung chemischen Ursprungs. Dieser Befund ist insofern überraschend, da nicht damit gerechnet werden konnte, daß die Löslichkeit des Wismutmethansulfonates so viel höher liegen würde, als das die Herstellversuche auf Basis der chemischen Auflösung vermuten ließen. Auch bei anderen Wismutsalzen ließ sich das Verhalten in dieser Form nicht erkennen. So ist zwar Wismutsulfat-Lösung durch chemische Auflösung von Wismut zugänglich, der Versuch einer elektrochemischen Auflösung führt jedoch nicht zu einer Lösung mit hohem Gehalt, sondern im Gegenteil zu deutlich niedrigen Gehalten. Auch im Vergleich zu anderen Metallen war ein solches Verhalten nicht zu erwarten gewesen.

Vorzugsweise wird erfindungsgemäß metallisches Wismut in Form von Pulver, Granalien, Nadeln, Schrot, Draht, Stäben, Wolle, Folien oder Blechen eingesetzt.

Typischerweise werden in einer Elektrolysezelle mehrere kg Wismutmetall in Form von Brocken oder Ingots vorgelegt und anodisch kontaktiert. Als Kathode wird Bi-Metall in Form einer Platte oder eines Stabes eingesetzt. Die Zelle wird mit einer wässrigen Lösung der Methansulfonsäure als Elektrolyt gefüllt. Anschließend wird Strom aus einer Gleichspannungsquelle angelegt. Der Stromstärkebereich liegt zwischen 2 und 20 A/dm$^2$, die Spannung zwischen 4 und 20 V. Nach ca. 24 Stunden ist die Temperatur des Elektrolysten auf ca. 55°C gestiegen. Eine Probe des Elektrolyten wird entnommen und analysiert. Der Gehalt an beispielsweise Wismutmethansulfonat beträgt > 600 g/l. Die Elektrolyse kann kontinuierlich betrieben werden, indem an geeigneter Stelle der Elektrolysezelle konzentrierte Metallsalzlösung entnommen und beispielsweise Methansulfonsäure in entsprechender Weise ergänzt wird. Die so erhaltenen Lösungen sind lagerstabil und können mit Wasser beliebig verdünnt werden, ohne daß es zu störenden Ausfällungen kommt. Die Reaktion wird bei einer Temperatur im Bereich von 15 bis 100 °C im Verlauf von 4 bis 20 Stunden bei einer Spannung von 3 bis 15 V und einem Strom von 2 bis 20 A/dm$^2$ durchgeführt. Besonders hohe Konzentrationen der wäßrigen Lösungen sind erhältlich, wenn man den Anodenraum von dem Kathodenraum durch Ionenaustauschermembranen, Diaphragmen, Mikrofilter oder konstruktive Maßnahmen trennt.

Folgende Beispiele beschreiben die Erfindung näher:

Beispiel 1:

Chemische Herstellung von Wismutmethansulfonat-Lösung

In einem Reaktionsgefäß wurden 56 g 70%ige Methansulfonsäure und 31 g entionisiertes Wasser vorgelegt und auf 80°C erwärmt. Hierauf wurde Wismutoxid langsam und portionsweise zugegeben. Eventuell auftretende Trübungen konnten durch Temperaturerhöhung auf ca. 105°C aufgelöst werden. Nach Zugabe von max. 16 g Wismutoxid war die Lösung an Wismutmethansulfonat gesättigt. Weitere Zugabe von Wismutoxid führte zur Ausscheidung von Wismutylmethansulfonat, welches sich nicht mehr auflösen ließ. Die Lösung wies folgende Gehalte auf:

| Wismutmethansulfonat | 380 g/l |
| freie Methansulfonsäure | 160 g/l |

Beispiel 2:

Verdünnungsversuch

Die in Beispiel I erhaltene Lösung wurde im Verhältnis 1: 10 mit entionisiertem Wasser verdünnt. Die Lösung war stabil.

Beispiel 3:

Elektrochemische Herstellung von Wismutmethansulfonat-Lösung

In einer Elektrolysezelle wurden 1,2 l Methansulfonsäure mit einer Konzentration von 500 g/l vorgelegt. Als Anode wurden ca. 4 kg Wismutmetall in Form von Brocken eingesetzt, als Kathode diente ein Edelstahlblech mit einer Oberfläche von ca. 20 cm$^2$. Es wurde 24 h bei 8 A ( ca. 3 A/dm$^2$) und 12 V elektrolysiert, wobei die Innentemperatur der Zelle auf 50°C stieg. Die Verdampfungsverluste wurden mittels Wasser ergänzt. Es wurden ca. 400 ml Elektrolyt entnommen und analysiert:

> Dichte: 1,53 kg,
> Bi-Gehalt: 270 g/l,
> Bi-Methansulfonat-Gehalt: 637 g/l,
> freie Methansulfonsäure: 200 g/l

Die 400 ml wurden in Form von Methansulfonsäure-Lösung mit 500g/l ergänzt und die Elektrolyse fortgesetzt. Nach weiteren 24 h bei 10 A ( ca. 3,7 A/dm$^2$) und 13 V konnten erneut 400 ml Elektrolyt entnommen werden. Die Analyse ergab:

> Dichte: 1,55 kg,
> Bi-Gehalt: 275 g/l,
> Bi-Methansulfonat-Gehalt: 638 g/l,
> freie Methansulfonsäure: 198 g/l.

Beispiel 4:

Verdünnungstest

100 g der nach Beispiel 3 gewonnenen Lösung wurden 1:10 und 1: 100 mit entionisiertem Wasser verdünnt. Nach 6 Monaten waren die Lösungen stabil und klar.

**Patentansprüche**

1. Verfahren zur Herstellung von hochkonzentrierten, hydrolysestabilen wässrigen Lösungen von Wismutmethansulfonat mit einer Konzentration von wenigstens 600 g/l, wobei man Methansulfonsäure mit metallischem Wismut als Anode einer elektrolytischen Auflösung der Anode unterwirft und die Reaktion bei einer Temperatur im Bereich von 15 bis 100 °C im Verlauf von 4 bis 20 Stunden bei einer Spannung von 3 bis 15 V und einem Strom von 2 bis 20 A/dm$^2$ durchführt.

2. Verfahren nach Anspruch 1, **dadurch gekennzeichnet, dass** man eine wässrige Lösung der Methansulfonsäure in einer Konzentration von 20 bis 70 Gew.-% einsetzt.

3. Verfahren nach Anspruch 1 und 2, **dadurch gekennzeichnet, dass** man metallisches Wismut in Form von Pulver, Granalien, Nadeln, Schrot, Draht, Stäben, Wolle, Folien oder Blechen einsetzt.

4. Verfahren nach einem der Ansprüche 1 bis 3, **dadurch gekennzeichnet, dass** man den Anodenraum von dem Kathodenraum durch Ionenaustauschermembranen, Diaphragmen, Mikrofilter oder konstruktive Maßnahmen trennt.

5. Verfahren nach einem der Ansprüche 1 bis 4, zur Herstellung von Lösungen von Wismutmethansulfonat, wobei man die Lösungen dem Reaktionsansatz entnimmt und mit frischer Methansulfonsäure kontinuierlich oder diskontinuierlich auffüllt.

**Claims**

1. Process for preparing a highly concentrated aqueous solution, which is stable to hydrolysis, of bismuth methanesulphonate with a concentration of at least 600 g/l, methanesulphonic acid being subjected to electrolytic dissolution of the anode with metallic bismuth as the anode and the reaction being carried out at a temperature in the range from 15 to 100°C over the course of from 4 to 20 hours at a voltage of from 3 to 15 V and at a current of from 2 to 20 A/dm$^2$.

2. Process according to Claim 1, **characterized in that** an aqueous solution of the methanesulphonic acid is employed in a concentration of from 20 to 70% by weight.

3. Process according to Claims 1 and 2, **characterized in that** metallic bismuth is employed in the form of powder, shot, needles, scrap, wire, rods, wool, foils or sheets.

4. Process according to any one of Claims 1 to 3, **characterized in that** the anode chamber is separated from the cathode chamber by ion exchange membranes, diaphragms, microfilters or constructional measures.

5. Process according to any one of Claims 1 to 4, for preparing solutions of bismuth methanesulphonate, wherein the solutions are withdrawn from the reaction mixture and made up continuously or batchwise with fresh methanesulphonic acid.

**Revendications**

1. Procédé de préparation de solutions aqueuses, fortement concentrées, stables vis-à-vis de l'hydrolyse, de méthanesulfonate de bismuth, ayant une concentration de moins de 600 g/l, l'acide méthanesulfonique étant soumis à une dissolution électrolytique de l'anode, avec du bismuth métallique en tant qu'anode, et la réaction étant effectuée à une température dans la plage de 15 à 100°C en l'espace de 4 à 20 heures à une tension de 3 à 15 V et pour un courant de 2 à 20 A/dm$^2$.

2. Procédé selon la revendication 1, **caractérisé en ce que** l'on utilise une solution aqueuse de l'acide méthanesulfonique dans une concentration de 20 à 70% en poids.

3. Procédé selon la revendication 1 et 2, **caractérisé en ce que** l'on utilise du bismuth métallique sous la forme de poudre, de granulés, d'aiguilles, de ferraille, de fils, de tiges, de laine, de feuilles ou de tôles.

4. Procédé selon l'une quelconque des revendications 1 à 3, **caractérisé en ce que** l'on sépare l'espace anodique de l'espace cathodique par des membranes d'échangeurs d'ions, des diaphragmes, des microfiltres ou des mesures constructives.

5. Procédé selon l'une quelconque des revendications 1 à 4, en vue de la préparation de solutions de méthanesulfonate de bismuth, les solutions étant extraites du mélange réactionnel et étant complétées à l'aide d'acide méthanesulfonique frais d'une manière continue ou discontinue.